# EUROPEAN PATENT SPECIFICATION

(11) **EP 0 961 014 B1**
(45) Date of publication and mention of the grant of the patent: **09.10.2002**
(21) Application number: 99109878.1
(22) Date of filing: 19.05.1999
(51) Int. Cl.: F01N 7/18, B60K 13/04, F16L 3/18, F16L 3/10

(54) **Resilient support device for the exhaust pipe of a vehicle**
Federnde Stützeinrichtung für die Abgasleitung eines Kraftfahrzeugs
Support élastique pour tuyau d'échappement de véhicule

(30) Priority: 29.05.1998 IT TO980461
(43) Date of publication of application: 01.12.1999
(73) Proprietor: IVECO FIAT S.p.A., 10156 Torino (IT)
(72) Inventor: Gregori, Armando, Frazione Astrio, 25043 Breno (IT)
(74) Representative: Jorio, Paolo

(56) References cited:
- DE-A- 2 441 297
- DE-A- 2 622 432
- GB-A- 502 776
- GB-A- 647 121
- US-A- 2 308 969

## Description

The present invention relates to a support device for the exhaust pipe of a motor vehicle and, in particular but not exclusively, to a support device for anchoring the exhaust pipe to a power unit of a commercial vehicle.

It is known that the exhaust pipe of motor vehicles is secured at its front end to the exhaust manifold of the engine and is generally anchored to the vehicle in the vicinity of its rear end by means of a first support device.

Particularly in the case in which the exhaust pipe is provided with a catalytic converter in addition to a silencer, and therefore the overall weight is considerable, it is necessary to secure the exhaust pipe to the power unit in such a way as to limit dynamic oscillations (for example caused by unevenness in the road surface) and, therefore, stress at the level of the connection of the pipe to the engine exhaust manifold.

For this purpose, support devices are known which comprise a collar clamped around the pipe and a fastening bracket connecting the collar in a substantially rigid manner to the power unit.

In support devices of the type briefly described the fastening bracket is subject to high variable loads both of a dynamic nature and, above all, as a result of the thermal expansion of the exhaust pipe. These loads give rise to a reduction in the service life of the bracket which, therefore, has to be replaced quite frequently.

DE-A-26 22 432 discloses a support device for a pipe including a flexible strip forming a collar adapted to surround the pipe and a bracket for hanging the strip to a fixed rail. Being the pipe supported by a flexible strip, the device cannot be used in automotive applications where dynamic loads exist.

The object of the invention is to devise a support device for the exhaust pipe of a motor vehicle, in particular a commercial vehicle, which does not have the drawbacks associated with the above-mentioned known devices.

This object is achieved by a support device according to claim 1.

With a view to a better understanding of the present invention a preferred embodiment will be described non-restrictively by way of example below and with reference to the accompanying drawings, in which:
Figure 1 is a view in elevation of a support device for an exhaust pipe according to the present invention, and
Figure 2 is a section taken along the line II-II in Figure 1.

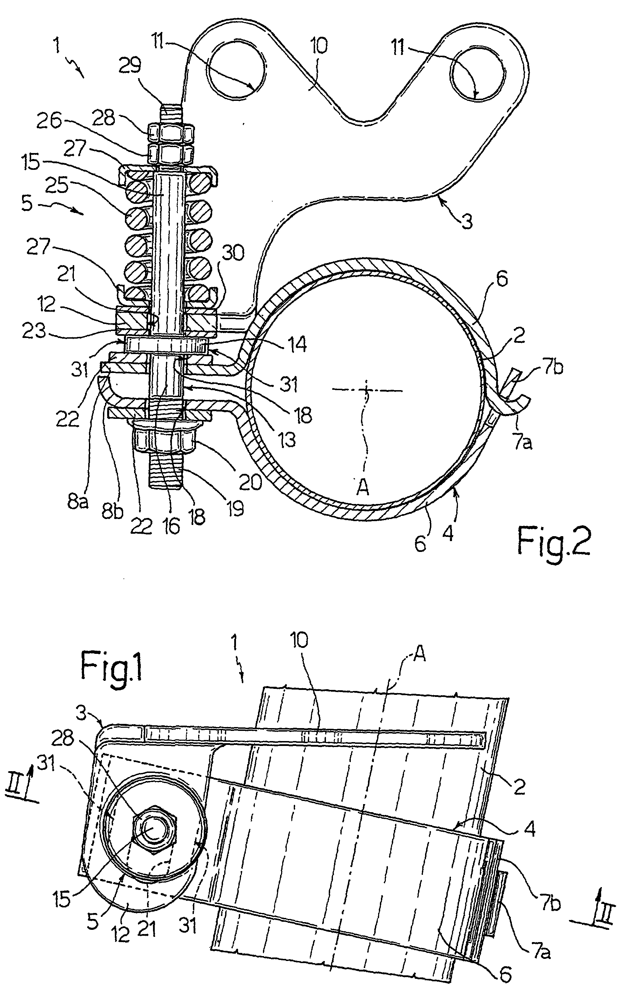

Referring now to the Figures 1 and 2, the reference numeral 1 generally denotes a support device for an exhaust pipe 2 for a commercial vehicle. The device 1 essentially comprises a fastening bracket 3 designed to be attached rigidly to a power unit (not shown) of the vehicle, a collar 4 clamped around the exhaust pipe 2 and a connecting assembly 5 disposed between the fastening bracket 3 and the collar 4.

More precisely, the collar 4 is formed by two half collars 6 of substantially semicylindrical shape having respective first ends 7a,7b which are joined together substantially in the manner of a hinge and respective second ends 8a,8b extending radially and parallel to one another, which ends are tightened towards one another by the connecting assembly 5, as will be described below, so as to keep the two half collars 6 clamped against the pipe 2.

The fastening bracket 3 has essentially a flat wall 10, provided at one end with a pair of holes 11 for attachment to the power unit and, in particular, to the gearbox of the vehicle, and an extension 12 bent at 90o with respect to the wall 10 and projecting from an opposite end of the wall 10 substantially in the direction of an axis A of the pipe 2.

The connecting assembly 5 essentially comprises a spindle 13 provided with an intermediate flange 14, an upper stem 15 and a lower stem 16 extending axially on opposite sides with respect to the intermediate flange 14.

The lower stem engages respectively in holes 18 in the ends 8a,8b of the half collars 6 and has a threaded free end 19 on which is screwed a self-locking nut 20 to tighten said ends 8a,8b towards one another and against the flange 14. Advantageously, respective washers 22 are inserted between the flange 14 and the end 8a, and also between the end 8b and the self-locking nut 20.

The upper stem 15 of the spindle 13 is arranged to pass through a slot 21 which is provided in the extension 12 and which is elongated in a direction parallel to the axis A of the pipe 2; the flange 14 is arranged to abut axially against the extension 12, with the interposition of a washer 23.

The connecting assembly 5 further comprises a helical spring 25, of suitable stiffness, arranged coaxially to the upper stem 15 of the spindle 13. The spring 25, the ends of which bear against respective cups 27, is compressed axially between the extension 12 of the fastening bracket 3 and a nut 26 screwed on to a threaded end 29 of the upper stem 14. The nut 26 determines the compression preloading of the spring 25 and a lock nut 28 prevents it from becoming unscrewed in use.

A washer 30 is inserted between the lower cup 27 and the extension 12.

The mode of operation of the support device 1 and, in particular, of the connecting assembly 5 is as follows.

The spring 25 provides an elastic load so as to maintain the collar 4 connected in a substantially rigid manner to the fastening bracket 3 during the normal operating conditions of the vehicle in response to the dynamic loads acting on the pipe 2. However, the spring 25 does allow differential thermal expansion between the pipe 2 and the parts of the vehicle to which it is attached. In fact, if a differential thermal expansion occurs, the axial forces acting on the collar 4 are sufficient to overcome the frictional force generated by the spring 25 and acting between the extension 12 of the bracket 3 and the respective washers 23,30.

The advantages which can be achieved with the present invention are apparent from a study of the features of the support device 1 designed in accordance with therewith. In particular, this device makes it possible to provide an effective additional connection of the pipe 2 to the power unit, and therefore to limit stress in the connecting zone between the pipe 2 itself and the exhaust manifold of the vehicle engine. Therefore, the connecting assembly 5 makes possible axial expansion of the pipe 2 and absorbs the load peaks which would otherwise act on the bracket 3. Accordingly, the service life of the bracket 3 is increased.

Finally, it is evident that the device 1 described can be subject to modifications and variations which do not depart from the scope of protection of the claims.

## Claims

1. A support device (1) for the exhaust pipe (2) of a motor vehicle, of the type comprising a collar (4) designed to be clamped around said exhaust pipe (2), a fastening bracket (3) designed to be attached to a connecting part of said motor vehicle, and a connecting assembly (5) for connecting said collar (4) to said fastening bracket (3), **characterised in that** said connecting assembly (5) includes sliding coupling means (13, 21) adapted to allow relative sliding movement between said collar (4) and said bracket (3) at least in a direction parallel to the axis of said exhaust pipe (2), friction-type connecting means (12, 23, 30) disposed between said collar (4) and said bracket (3), and elastic thrust means acting on said friction-type connecting means (12, 23, 30) so as to maintain said collar (4) connected to the fastening bracket (3) in a substantially rigid manner in response to dynamic loads acting on the pipe (2).

2. A device according to claim 1, **characterised in that** said sliding coupling means (13, 21) comprise a spindle (13) rigidly connected to said collar (4) and a slot (21) which is provided in a part of said bracket (3), is elongated in a direction parallel to an axis (A) of said exhaust pipe (2) and is engaged by said spindle (13).

3. A device according to claim 2, **characterised in that** said friction-type connecting means (12; 20, 30) comprise respective contact portions (12; 20, 30) attached to said bracket (3) and to said spindle (13), said thrust means comprise a spring (25) coaxial to said spindle (13) and adapted to exert an elastic load generating a respective contact pressure between said contact portions (12; 23, 30).

4. A device according to claim 2 or 3, **characterised in that** said spindle (13) comprises an intermediate flange (31) defining an axial stop for said spindle (13) with respect to said extension (12) of said bracket (3), and a first and second stem (15, 16) extending axially on opposite sides of said flange (31).

5. A device according to claim 4, **characterised in that** said first stem (15) is arranged to pass through said slot (21), said spring (25) between coaxial to said first stem (15) and compressed between said extension (12) and stop means (26, 28) provided on an end portion (29) of said first stem.

6. A device according to claim 5, **characterised in that** said contact portions are formed by said extension (12) of said bracket (3) and by a pair of washers (23, 30) coaxial to said spindle (13) and interposed between said extension (12) and, respectively, said flange (14) and said spring (25).

7. A device according to claim 5 or 6, **characterised in that** said end portion (29) of said first stem (15) is threaded, said stop means comprising a nut (26) and a lock nut (28) screwed on to said threaded end portion (29) of said stem (15).

8. A device according to any one of the preceding claims, **characterised in that** said collar (4) is formed by a pair of half collars (6) having respective first ends (7a, 7b) which are joined together substantially in a hinge manner and respective second ends (8a, 8b) which are clamped together and connected to said bracket (3) of said connecting assembly (5).

9. A device according to claims 4 and 8, **characterised in that** said second stem (16) of said spindle (13) is arranged to pass through said second end portions (8a, 8b) of said half collars (6), and has a threaded portion (19) on to which a lock nut (20) is screwed which is adapted to clamp said second end portions (8a, 8b) together and against said intermediate flange (31) of said spindle (13).

## Patentansprüche

1. Stützeinrichtung (1) für die Abgasleitung (2) eines Motorfahrzeugs, mit einem Kragen (4), der dazu ausgestaltet ist, um die Abgasleitung (2) herum verklemmt zu werden, mit einer Befestigungshalterung (3), die ausgestaltet ist, um an einem Verbindungsteil des Motorfahrzeugs angebracht zu werden, und mit einer Verbindungsanordnung (5) zum Verbinden des Kragens (4) mit der Befestigungshalterung (3), **dadurch gekennzeichnet, dass** die Verbindungsanordnung (5) Gleitkopplungsmittel (13, 21) beinhaltet, die dazu angepasst sind, eine relative Gleitbewegung zwischen dem Kragen (4) und der Halterung (3) zumindest in einer Richtung parallel zur Achse der Abgasleitung (2) zu ermöglichen, reibungsartige Verbindungsmittel (12, 23, 30), die zwischen dem Kragen (4) und der Halterung (3) angeordnet sind, und elastische Stoßmittel, die auf die reibungsartigen Verbindungsmittel (12, 23, 30) einwirken, um so den Kragen (4) auf im Wesentlichen feste Art und Weise mit der Befestigungshalterung (3) verbunden zu halten, und zwar in Antwort auf dynamische Belastungen, die auf die Leitung (2) einwirken.

2. Einrichtung nach Anspruch 1, **dadurch gekennzeichnet, dass** die Gleitkopplungsmittel (13, 21) eine Spindel (13) aufweisen, die fest mit dem Kragen (4) verbunden sind, und dass ein Schlitz (21), welcher in einem Teil der Halterung (3) vorgesehen ist, sich in einer Richtung parallel zur Achse (A) der Abgasleitung (2) erstreckt und mit der Spindel (13) im Eingriff ist.

3. Einrichtung nach Anspruch 2, **dadurch gekennzeichnet, dass** die reibungsartigen Verbindungsmittel (12, 20, 30) Kontaktbereiche (12; 20, 30) aufweisen, die an der Halterung (3) angebracht sind und an der Spindel (13), wobei die Stoßmittel eine Feder (25) aufweisen, die koaxial zur Spindel (13) angeordnet ist und so ausgestaltet ist, dass sie eine elastische Belastung ausübt, die einen Kontaktdruck zwischen den Kontaktbereichen (12; 23, 30) erzeugt.

4. Einrichtung nach Anspruch 2 oder 3, **dadurch gekennzeichnet, dass** die Spindel (13) einen Zwischenflansch (31) aufweist, welcher einen axialen Anschlag für die Spindel (13) bezüglich der Erweiterung (12) der Halterung (3) definiert, und einen ersten Schaft (15) und einen zweiten Schaft (16), die sich axial auf gegenüberliegenden Seiten des Flansches (31) erstrecken.

5. Einrichtung nach Anspruch 4, **dadurch gekennzeichnet, dass** der erste Schaft (15) so angeordnet ist, dass er durch den Schlitz (21) hindurchtritt, wobei die Feder (25) koaxial zum ersten Schaft (15) angeordnet ist und komprimiert ist zwischen der Erweiterung (12) und Anschlagmitteln (26, 28), die an einem Endbereich (29) des ersten Schafts vorgesehen sind.

6. Einrichtung nach Anspruch 5, **dadurch gekennzeichnet, dass** die Kontaktbereiche mittels der Erweiterung (12) der Halterung (3) und mittels eines Paars von Unterlegscheiben (23, 30) ausgeformt sind, die koaxial zu der Spindel (13) liegen und zwischen der Erweiterung (12) und dem Flansch (14) bzw. der Feder (25) angeordnet sind.

7. Einrichtung nach Anspruch 5 oder 6, **dadurch gekennzeichnet, dass** der Endbereich (29) des ersten Schafts (15) mit einem Gewinde versehen ist, wobei die Anschlagmittel eine Mutter (26) und eine Verriegelungsmutter (28) aufweisen, die auf den Endbereich (29) mit dem Gewinde des Schafts (15) aufgeschraubt sind.

8. Einrichtung nach einem der vorangehenden Ansprüche, **dadurch gekennzeichnet, dass** der Kragen (4) aus einem Paar von halben Kragen (6) mit jeweils einem ersten Ende (7a, 7b) ausgeformt ist, welche im Wesentlichen wie ein Scharnier zusammengefügt sind, und mit jeweils einem zweiten Ende (8a, 8b), welche zusammengeklemmt sind und mit der Halterung (3) der Verbindungsanordnung (5) verbunden sind.

9. Einrichtung nach Anspruch 4 und 8, **dadurch gekennzeichnet, dass** der zweite Schaft (16) der Spindel (13) so angeordnet ist, dass er durch die zweiten Endbereiche (8a, 8b) der beiden halben Kragen (6) hindurchtritt, und dass er einen Bereich (19) mit einem Gewinde hat, auf welches eine Verriegelungsmutter (20) aufgeschraubt ist, welche angepasst ist, um die zweiten Endbereiche (8a, 8b) zusammen und gegen den Zwischenflansch (31) der Spindel (13) zu verklemmen.

## Revendications

1. Dispositif de support (1) pour le tuyau d'échappement (2) d'un véhicule à moteur, du type comprenant un collier (4) conçu de manière à être serré autour dudit tuyau d'échappement (2), une potence de fixation (3) conçue de manière à être fixée sur une partie de liaison dudit véhicule à moteur, et un ensemble de liaison (5) destiné à relier ledit collier (4) à ladite potence de fixation (3), **caractérisé en ce que** ledit ensemble de liaison (5) comprend un moyen de couplage coulissant (13, 21) adapté de manière à permettre un déplacement coulissant relatif entre ledit collier (4) et ladite potence (3), au moins dans une direction parallèle à l'axe dudit tuyau d'échappement (2), un moyen de liaison du type à frottement (12, 23, 30) disposé entre ledit collier (4) et ladite potence (3), un moyen d'application élastique agissant sur ledit moyen de liaison du type à frottement (12, 23, 30) de manière à maintenir ledit collier (4) couplé à la potence de fixation (3) d'une manière sensiblement rigide en réponse aux charges dynamiques agissant sur le tuyau (2).

2. Dispositif selon la revendication 1, **caractérisé en ce que** ledit moyen de couplage coulissant (13, 21) comprend une broche (13) reliée de manière rigide audit collier (4) et une fente (21) qui est formée sur une partie de ladite potence (3), est allongée dans une direction parallèle à un axe (A) dudit tuyau d'échappement (2) et est traversée par ladite broche (13).

3. Dispositif selon la revendication 2, **caractérisé en ce que** ledit moyen de liaison du type à frottement (12 ; 23, 30) comprend des parties de contact respectives (12 ; 23, 30) reliées à ladite potence (3) et à ladite broche (13), ledit moyen d'application comprend un ressort (25) coaxial par rapport à ladite broche (13) et adapté pour exercer une charge élastique produisant une pression de contact respective entre lesdites parties de contact (12 ; 23, 30).

4. Dispositif selon la revendication 2 ou 3, **caractérisé en ce que** ladite broche (13) comprend une collerette intermédiaire (31) définissant une butée axiale pour ladite broche (13) par rapport à ladite extension (12) de ladite potence (3), et une première et seconde tiges (15, 16) s'étendant axialement sur les faces opposées de ladite collerette (31).

5. Dispositif selon la revendication 4, **caractérisé en ce que** ladite tige (15) est agencée de manière à passer à travers ladite fente (21), ledit ressort (25) étant coaxial par rapport à ladite première tige (15) et comprimé entre ladite extension (12) et un moyen de butée (26, 28) formé sur une partie d'extrémité (29) de ladite première tige.

6. Dispositif selon la revendication 5, **caractérisé en ce que** lesdites parties de contact sont formées par ladite extension (12) de ladite potence (3) et par une paire de rondelles (23, 30) coaxiales par rapport à ladite broche (13) et interposées entre ladite extension (12) et, respectivement, ladite collerette (14) et ledit ressort (25).

7. Dispositif selon la revendication 5 ou 6, **caractérisé en ce que** ladite partie d'extrémité (29) de ladite première tige (15) est filetée, ledit moyen de butée comprenant un écrou (26) et un écrou de blocage (28) vissés sur ladite partie d'extrémité filetée (29) de ladite tige (15).

8. Dispositif selon l'une quelconque des revendications précédentes, **caractérisé en ce que** ledit collier (4) est formé par une paire de demi-colliers (6) présentant des premières extrémités respectives (7a, 7b), qui sont couplées ensemble sensiblement à la manière d'une charnière, et des secondes extrémités respectives (8a, 8b) qui sont serrées ensemble et reliées à ladite potence (3) dudit ensemble de liaison (5).

9. Dispositif selon les revendications 4 et 8, **caractérisé en ce que** ladite seconde tige (16) de ladite broche (13) est agencée de manière à passer à travers lesdites secondes parties d'extrémité (8a, 8b) desdits demi-colliers (6), et présente une partie filetée (19) sur laquelle un écrou de blocage (20) est vissé, qui est adaptée pour bloquer lesdites secondes parties d'extrémité (8a, 8b) entre elles et contre ladite collerette intermédiaire (31) de ladite broche (13).
